# EUROPEAN PATENT SPECIFICATION

(11) **EP 4 377 403 B1**
(45) Date of publication and mention of the grant of the patent: **15.04.2026**
(21) Application number: 22758469.5
(22) Date of filing: 29.07.2022
(51) Int. Cl.: C09D 5/00

(54) **UV-CURABLE PUTTY COMPOSITION FOR COVERING, FILLING, AND REPAIRING SUBSTRATE DEFECTS**
UV-HÄRTBARE KITTZUSAMMENSETZUNG ZUR ABDECKUNG, FÜLLUNG UND REPARATUR VON SUBSTRATDEFEKTEN
COMPOSITION DE MASTIC DURCISSABLE AUX UV POUR COUVRIR, REMPLIR ET RÉPARER LES DÉFAUTS D'UN SUBSTRAT

(30) Priority: 30.07.2021 US 202163227592 P; 21.09.2021 EP 21197869
(43) Date of publication of application: 05.06.2024
(73) Proprietor: Akzo Nobel Coatings International B.V., 1077 WW Amsterdam (NL)
(72) Inventor: COTE, Dany, Nashville, Tennessee 37214 (US); FLEMING, Forest, Nashville, Tennessee 37214 (US); BROWN, Alan Scott, Nashville, Tennessee 37214 (US); DENNING, Trevor Trace, Nashville, Tennessee 37214 (US)
(74) Representative: Akzo Nobel IP Department
(86) International application number: PCT/EP2022/071332
(87) International publication number: WO 2023/006943

(56) References cited:
- EP-A1- 1 471 113
- WO-A1-2019/193279
- CN-A- 109 913 021
- CN-A- 111 154 382

## Description

### Field of the invention

The present invention relates to a putty composition for covering, filling and repairing gaps and defects in substrates and to methods of applying the putty composition to substrates. Said composition has improved dimensional stability, and good applicability and fill properties. The present invention also relates to methods of filling gaps and defects in substrates with such putty composition, uses of said putty composition and substrates treated with the putty composition.

### Background of the invention

Fillers, such as putty compositions and pastes, are commonly used in the wood industry, particularly in the construction and furniture industries, to repair defects, damage or imperfections such as holes, cracks, knots, scratches, or scrapes in wooden substrates, where, e.g., it has been necessary to drill holes or the like during the fabrication process. Some of the challenges faced when applying a filler to a substrate include shrinkage, difficulty in application, improper adhesion, and incomplete cure.

Fillers all have some degree of shrinkage. When the putty composition is cured, it oftentimes shrinks, thereby compromising the level of fill and subsequently the structural integrity of the wooden substrate as well as the aesthetics. Shrinkage may require further processing steps, thereby reducing process efficiencies.

Ease of application is also important when working with fillers. The filler should fill well even when quickly applied in an automated industrial line.

Incomplete cure is another challenge faced when applying putty compositions, especially to defects in wooden substrates that have higher depth profiles.

The cured putty composition should also present good adhesion, as it is usually coated with further layers of materials, such as primer, enamel paint, varnish, etc. It is beneficial that the subsequent coating layer adhere properly to the cured putty composition so that there is no peeling, cracking, and the integrity and aesthetics of the final coated substrate are not compromised.

EP 1471113 A1 describes a UV-curable composition comprising a) an organic polymer having a reactive silicon-containing group and b) a block copolymer containing one soft segment and at least one hard segment.

WO 2019/193279 describes a composition comprising: - an -NCO component comprising: A) at least one polyurethane comprising at least two NCO end groups obtained by polyaddition reaction of a composition comprising at least one diisocyanate and a composition comprising at least one polyol, B) at least one polyisocyanate comprising at least three isocyanate NCO functions, selected from the group consisting of biurets, isocyanurates, adducts of diisocyanates and triols, and mixtures thereof; an -OH component comprising at least two polyols P1 having a number-average molecular weight of strictly less than 500 g/mol and at least one polyol P2 having a number-average molecular weight of strictly greater than 1000 g/mol, said composition comprising at least one rheology agent.

CN 111 154 382 A decribes a UV curable coating composition comprising 15 to 35 wt.% epoxy acrylate resin; 15-30 wt.% polyester acrylate ; 10-20 wt.% monomer; 15-38 wt.% sanding powder; 3-5 wt.% photoinitiator; 0.2-0.5 wt.% defoamers; 0.1 to 0.3 wt.% leveling agent; and 1-2 wt.% anti-settling agent.

CN 109 913 021 A describes an electron beam roll coating putty comprising (in parts by weight) 15-35 parts epoxy acrylate resin; 15-30 parts modified epoxy acrylate; 3-8 parts modified polyurethane acrylate; 10-20 monomers; 15-38 parts fillers; 0.2-0.5 parts defoamers; 0.1-0.3 parts leveling agent; and 1-2 parts anti-settling agent.

Monomers are typically used in putties to improve sandability and viscosity of the composition. It has been observed, however, that monomers also cause the putty to shrink when cured. Therefore, there is a need for a putty that exhibits improved dimensional stability while retaining acceptable sandability and viscosity for application to wooden substrates.

### Summary

The inventors have surprisingly found that the combination of a solids content of 99 wt % or greater, a low weight percentage of monomers, and including a combination of wax (for example, amides) and silica still allows for good applicability while maintaining better dimensional stability/less shrinkage. These improved properties make the putty better for repairing wood defects. The inventors also surprisingly found that including a non-UV curable component in the putty composition unexpectedly improves adhesion of the cured putty composition so that subsequent coating layers can better adhere to the putty composition. This can obviate the need for sanding the putty composition prior to the application of subsequent coatings over it.

Moreover, including a surface cure photoinitiator and a through-cure photoinitiator improves the overall cure of the coating, especially when filling deeper voids in the wood substrate. The improved cure is achieved using only one type of cure that uses ultraviolet (UV) light. The inventors surprisingly found that using a blend having a 5:1 to 10:1 ratio by weight of surface-cure photoinitiator to through-cure photoinitiator results in improved cure of the putty composition.

The putty composition of the present disclosure works particularly well when applied in an automated industrial line, allowing for faster, more cost-effective application. It has superior filling properties when applied on an automated coating machine as opposed to manual application. After application, the cured material has superior dimensional stability, sandability and recoatability. Due to the improved recoatability, this putty composition can improve production efficiencies by allowing the applicator to forgo the primer application step.

The present inventors have found a novel putty composition that results, after curing, in a putty coating with significantly improved dimensional stability, applicability, fill properties, recoatability and cure compared to known putty coatings.

In a first aspect, the present invention is directed to a putty composition comprising about 6 to 50 wt % of a UV curable oligomer, about 4 to 25 wt % of a non-reactive oligomer, about 5 to 30 wt % of a UV-reactive monomer, an extender, about 3-10 wt % of fumed silica, a polyhydroxycarboxylic acid amide, and about 3-6 wt % of photoinitiators, said photoinitiators comprising a surface-cure photoinitiator and a through-cure photoinitiator, and wherein the putty composition has a solids content of about 99 wt% or greater.

In an exemplary embodiment, the ratio by weight of the photoinitiator for surface-cure to the photoinitiator for through-cure is from 5:1 to 10:1. In a further embodiment, the photoinitiator for surface-cure can comprise cyclohexyl phenyl ketone and/or the photoinitiator for through-cure can comprise benzoyl phosphine oxide.

In another exemplary embodiment, the UV curable oligomer of the putty composition is selected from the group consisting of aliphatic or aromatic urethane, epoxy, or polyester acrylates and mixtures thereof. In a further embodiment, the UV curable oligomer has an acrylate functionality equal to or greater than 2. In some embodiments, the UV oligomer has 3 to 4 reactive groups.

In another exemplary embodiment, the UV-reactive monomer is selected from the group consisting of trimethylolpropane triacrylate (TMPTA), neopentyl glycol diacrylate (NPGDA), dipropyleneglycol diacrylate (DPGDA), tripropylene glycol diacrylate (TRPDGA), trimethylolpropane triacrylate (TMPTA), trimethylolpropane trimethacrylate (TMPTMA), pentaerythritol triacrylate (PETA), and mixtures thereof. In another embodiment, the monomer has a functionality of 2 to 4.

In a further embodiment, the extender is selected from the group consisting of talc, gypsum, calcium carbonate, wollastonite, barium sulfate, and mixtures thereof. In an additional embodiment, the extender is present in amount of about 5 to 30 wt % based on the weight of the putty composition.

In another embodiment, the ratio by weight of polyhydroxycarboxylic acid amide to fumed silica is 1:10 to 1:4.

Another aspect of the present invention provides a method of repairing a defect or imperfection in a substrate comprising the steps of a) providing the substrate, b) applying a putty composition according to the first aspect of the invention to the substrate, and c) curing the putty composition with UV radiation. The method can further comprise the step of d) applying a primer over the substrate, and e) applying an enamel over the primed substrate. In another embodiment, the method can further comprise sanding the substrate after the curing step c) and prior to step d).

A further aspect of the invention provides a substrate coated entirely or partially with the putty composition according to the first aspect of the invention.

### Brief Description of Drawings

A full understanding of the invention can be gained from the following description of certain embodiments of the invention when read in conjunction with the accompanying drawings in which:

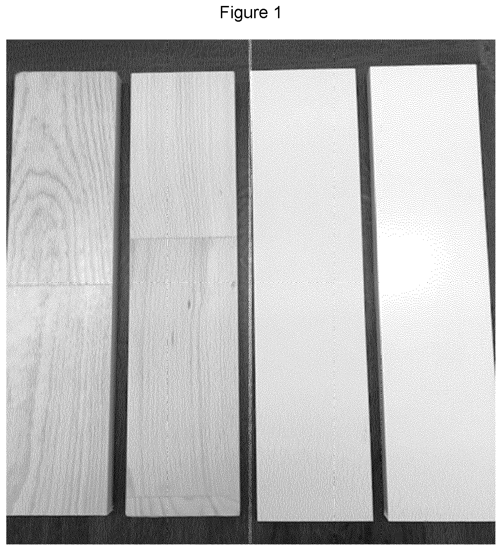

FIG. 1 is an image of the output of each step of the coating process described in Example 1.

### Detailed description of the invention

The following description of the preferred embodiment(s) is merely exemplary in nature and is in no way intended to limit the invention, its application, or uses.

As used herein, unless otherwise expressly specified, all numbers such as those expressing values, ranges, amounts or percentages may be read as if prefaced by the word "about", even if the term does not expressly appear.

As used herein, the singular forms *"a", "an"* and *"the"* include plural referents unless the context clearly dictates otherwise. For example, although reference is made herein to "a" release layer, "a" support platform, "an" overflow lip, a combination (a plurality) of these components can be used in the present invention.

As used herein, "plurality" means two or more.

The terms *"comprising", "comprises"* and *"comprised* of" as used herein are synonymous with *"including", "includes", "containing"* or *"contains",* and are inclusive or open-ended and do not exclude additional, non-recited members, elements or method steps. If used, the phrase *"consisting of'* is closed and excludes all additional elements. Further, the phrase *"consisting essentially of"* excludes additional material elements but allows the inclusion of non-material elements that do not substantially change the nature of the invention.

When referring to any numerical range of values, such ranges are understood to include each and every number and/or fraction between the stated range minimum and maximum. For example, a range of "1 to 10" is intended to include all sub-ranges between (and including) the recited minimum value of 1 and the recited maximum value of 10, that is, having a minimum value equal to or greater than 1 and a maximum value of equal to or less than 10. When amounts, concentrations, dimensions and other parameters are expressed in the form of a range, a preferable range, an upper limit value, a lower limit value or preferable upper and limit values, it should be understood that any ranges obtainable by combining any upper limit or preferable value with any lower limit or preferable value are also specifically disclosed, irrespective of whether the obtained ranges are clearly mentioned in the context.

The words *"preferred", "preferably", "desirably"* and *"particularly",* and synonyms thereof, are used frequently herein to refer to embodiments of the invention that may afford particular benefits, under certain circumstances. However, the recitation of one or more preferable, preferred, desirable or particular embodiments does not imply that other embodiments are not useful and is not intended to exclude those other embodiments from the scope of the invention.

As used herein, "putty" refers to a very viscous, sticky, dough-like liquid material that hardens after it is cured and can be used to for filling and repairing substrate imperfections.

As applied to radiation-curable resins and coating compositions, the term "UV" is intended to mean ultraviolet (UV).

An "oligomer" as used herein means a polymer having a molecular weight of 500 or more.

A "non-reactive oligomer" as used herein refers to an oligomer having no UV reactive group.

The term "substrate" as used herein refers to the parent or base material to which a coating is applied. A substrate can include, for example, solid wood, wood composites (including, without limitation, plywood, medium-density fibreboard (MDF), and wood flour containing composites), glass fiber-thermoset composites, PVC, plastics, and other non-cellulosic substrates.

As used herein, *"curing"* and like terms as used herein, refers to a process of setting or drying of a material to form a coating on a substrate.

All percentages, ratios and proportions used herein are given on a weight basis unless otherwise specified.

The present invention relates to a radiation-curable putty composition for covering, filling, and repairing wood defects in a production environment as a pre-step before finishing the wood. It has been surprisingly found that reducing the amount of monomer in a putty composition and including a combination of wax and silica allows for good applicability while reducing shrinkage. It has also been surprisingly found that including a non-reactive oligomer in the putty composition improves adhesion. The inventors also surprisingly found that including both a surface-cure photoinitiator and a through cure photoinitiator results in a more thoroughly and evenly cured putty composition.

The radiation curable putty composition according to one aspect of the invention can comprise:
about 6-50 wt % of a UV curable oligomer;
about 4-25 wt % of a non-reactive oligomer;
about 5-30 wt % of a UV-reactive monomer;
an extender;
about 3-10 wt % of fumed silica;
a polyhydroxycarboxylic acid amide; and
about 3-6 wt % of photoinitiators, said photoinitiators comprising a surface-cure
photoinitiator and a through-cure photoinitiator; and
wherein the putty composition has a solids content of 99 wt% or greater.

The UV curable oligomer of the putty composition can comprise aliphatic or aromatic urethane, epoxy, or polyester acrylates. In certain embodiments, the UV curable oligomer can be a modified bisphenol A epoxy diacrylate, an amine-modified polyether acrylate, an aliphatic epoxy-modified acrylate oligomer, an aliphatic polyester based urethane diacrylate oligomer, and mixtures thereof. The UV curable oligomer has a UV reactive group. The UV curable oligomer has a functionality equal to or greater than 2. In some embodiments, the UV curable oligomer has 3 to 4 reactive groups. If the functionality of the UV curable oligomer is too high, the putty composition can become too brittle.

The putty composition can comprise about 6-50 wt % of the UV curable oligomer based on the weight of the putty composition. In another embodiment, the putty composition comprises about 6-40 wt% of the UV curable oligomer. In yet another embodiment, the putty composition comprises about 20-40 wt % of UV curable oligomer. In another embodiment, the putty composition comprises about 10 wt% of UV curable oligomer based on the weight of the putty composition.

The putty composition of the present invention also comprises a non-reactive oligomer. The non-reactive oligomer can be an acrylic resin, a vinyl resin, a nitrocellulose resin, or mixtures thereof. The non-reactive oligomer should provide a tack-free film before UV curing.

The putty composition can comprise about 4-25 wt% of the non-reactive oligomer, based on the weight of the putty composition. In another embodiment, the putty composition can comprise about 12 to 20 wt% of the non-reactive oligomer, based on the weight of the putty composition. The non-reactive oligomer affects the adhesive properties of the putty composition. The inventors found that if the amount of non-reactive oligomer is too low, the coat applied over the cured putty composition does not adhere well to the surface of the cured putty composition. It was also found that if the amount of non-reactive oligomer is too high, the putty composition became too tacky to work with.

The putty composition comprises a monomer. The monomer has an acrylate backbone which makes it UV reactive. The monomer can be 1,6-hexanediol diacrylate (HDDA), tripropylene glycol diacrylate (TPGDA), dipropyleneglycol diacrylate (DPGDA), tripropylene glycol diacrylate (TRPDGA), trimethylolpropane triacrylate (TMPTA), trimethylolpropane trimethacrylate (TMPTMA), or pentaerythritol triacrylate (PETA), and mixtures thereof. The monomer has a functionality of 2 to 4. The putty composition can comprise more than about 5 wt % and up to about 30 wt % of the monomer, based on the weight of the putty composition.

In one embodiment, a blend of UV-reactive monomers and non-reactive oligomer can be used, such as an acrylic polymer diluted at about 50% by weight with a 1/1 ratio by weight of the reactive diluents 1,6-hexanediol diacrylate (HDDA) and tripropylene glycol diacrylate (TPGDA).

The putty composition of the present invention also comprises an extender. The extender can be a mineral or other inorganic extender, such as talc, calcium carbonate, wollastonite, barium sulfate, calcium carbonate, other similar materials, and mixtures thereof. In some embodiments, the extender is present in an amount of about 5-30 wt% based on the weight of the putty composition. In other embodiments, the extender is present in an amount of about 5-20 wt %, or about 5-10 wt % based on the weight of the putty composition. For interior applications, a higher amount of extender improves sandability of the cured putty composition. For exterior applications, a lower amount of extender improves weatherability of the cured putty composition.

The putty composition of the present invention also comprises polyhydroxycarboxylic acid amides.

The putty composition of the present invention also comprises fumed silica. This component is used to control viscosity. Fumed silica is also known as pyrogenic silica because it is produced in a flame. The fumed silica is present in an amount of about 3-10 wt% based on the weight of the putty composition.

In some embodiments, the polyhydroxycarboxylic acid amide is present in an amount of about 10-25 wt % of the fumed silica content by weight. In other embodiments, the polyhydroxycarboxylic acid amide is present in an amount between about 15-20 wt % of the fumed silica content. The inventors discovered that maintaining the ratio of polyhydroxycarboxylic acid amide to fumed silica within this range keeps the viscosity at desired levels for ease of application.

The putty composition of the present invention comprises a surface-cure photoinitiator and a through-cure photoinitiator. In certain embodiments, the two types of photoinitiators can be added as a blend. The blend of photoinitiators can be present in an amount of about 3-6 wt% based on the weight of the putty composition. The blend can comprise a ratio by weight of surface-cure photoinitiator to through-cure photoinitiator in the range of about 10:1 to 5:1.

The surface-cure photoinitiator can be of the cyclohexyl phenyl ketone class. For example, the surface-cure photoinitiator can be 1-hydroxy-cyclohexyl-phenyl-ketone, such as Irgacure ^{®} 184 photoinitiator, available from IGM. In another embodiment, the surface-cure photoinitiator can be 2-hydroxy-2-methylpropiophenone such as Darocur^{®} 1173 or phenyl glyoxylic acid methyl ester such as Darocur^{®} MBF, available from IGM.

The through-cure photoinitiator can be of the benzoyl phosphine oxide class. For example, the through-cure photoinitiator can be bis (2,4,6-trimethylbenzoyl)-phenylphosphineoxide, such as Irgacure^{®} 819, available from IGM. In another embodiment, the through-cure photoinitiator can be diphenyl (2,4,6-trimethylbenzoyl) phosphine oxide available from IGM.

The combination of surface-cure and through-cure photoinitiators results in more thorough curing, which is especially beneficial when the applied putty composition has a larger depth profile, such as when filling a deep surface defect in the wooden substrate. In some embodiments, the cured putty composition of the present disclosure reaches a level of cure over 99%.

The putty composition of the present invention can also comprise additives such as defoamers or deaerators, dispersing and/or wetting agents known to one in the art.

### Methods and Application

The putty composition of the present disclosure can be applied to solid wood, wood composites (including, without limitation, plywood, medium-density fibreboard (MDF), and wood flour containing composites), glass fiber-thermoset composites, PVC, plastics, and other non-cellulosic substrates. It can be used on substrates for window, floor and exterior molding applications. The putty composition can be applied over a tie coat for improving the adhesion of the putty composition to the substrate.

In certain aspects, the putty composition of the present disclosure has a substantially thick and smooth consistency that allows for it to be wiped onto a complex shaped wood surface using a negative mold.

The putty composition may be applied at a rate of less than 75 grams per sq. meter. The putty composition may also be applied at a rate of around 20-30 grams per sq. meter. The putty composition can be applied using UV gesso equipment.

The putty composition can be cured using a UV processor. The curing process can be completed with the use of a mercury or gallium UV arc lamp. The energy requirement is between 350 and 450 mj/cm² to produce a cured putty. The cured putty composition is recoatable with conventional waterborne styrene-acrylic latex, water-borne polyurethane, or poly(vinyl alcohol) based coatings, primers and enamel.

The putty composition when cured can be coated without additional surface preparation or, if sanding is desired, the cured paste has excellent sanding characteristics.

The following examples are illustrative of the present invention and are not intended to limit the scope of the invention in any way. Those of skill in the art should, in light of the present disclosure, appreciate that many changes can be made in the specific embodiments that are disclosed and still obtain a like or similar result without departing from the scope of the invention.

### Examples

The following list indicates some of the raw materials and ingredients used in the following examples. Alternative materials or suppliers may be substituted as is appreciated by one skilled in the art.

**Table 1**

| **Component** | **Trade Name** | **Chemical Name** | **Supplier** |
|---|---|---|---|
| UV curable oligomer | EBECRYL^{®} 3500 | modified bisphenol A epoxy diacrylate | Allnex |
| UV curable oligomer | LAROMER^{®} PO 94 F | amine-modified polyether acrylate | BASF |
| UV curable oligomer | LAROMER^{®} LR 8765 | aliphatic epoxy-modified acrylate oligomer | BASF |
| UV curable oligomer | CN991 | aliphatic polyester-based urethane diacrylate oligomer | Sartomer Americas |
| monomer | LAROMER^{®} HDDA | hexanediol diacrylate (HDDA) | BASF |
| monomer | AGISYN^{™} 2816 | 1,6-hexanediol diacrylate (HDDA), CAS No. 13048-33-4 | DSM |
| monomer | LAROMER^{®} TPGDA | tripropylene glycol diacrylate | BASF |
| blend of monomers and non-reactive oligomer | EBECRYL^{®} 745 | acrylic polymer diluted at about 50% by weight with a 1/1 ratio of the reactive diluents 1,6-hexanediol diacrylate (HDDA) and tripropylene glycol diacrylate (TPGDA) | Allnex |
| non-reactive acrylic oligomer | PARALOID^{™} B-66 | thermoplastic acrylic resin | Dow |
| surface-cure photoinitiator | Irgacure^{®} 184 | 1-Hydroxy-cyclohexyl-phenyl-ketone, CAS No. 947-19-3 | IGM |
| through-cure photoinitiator | Irgacure^{®} 819 | Bis (2,4,6-trimethylbenzoyl)-phenylphosphineoxide, CAS No. 162881-26-7 | IGM |
| fumed silica | AEROSIL^{®} R 9752 | fumed silica | Evonik Industries |
| wax | BYK-R 605 amide wax | solution of polyhydroxycarboxylic acid amides | Byk |
| extender | OMYACARB^{®} 5 | calcium carbonate | Omya |
| additive | TEGO^{®} Airex 920 | silicone-free deaerator | Evonik |

### Example 1 (Inventive - Interior Application)

The formulation shown for Example 1 in Table 2 below was blended thoroughly, with care to grind in the total inorganics into the resin matrix such that they were fully wetted and incorporated using methods common in the art. The material was loaded into the trough of a specialized automated gesso machine for application. Suitable dies for the profiles being coated (in this case, a rectangular profile) were selected and the machine run. Settings on the machine were from 150-220 fpm, with a UV curing power of 350-450 MJ and dwell time of 1-2 seconds. Approximately 35-55 grams per square meter of the putty composition were applied to boards that were 12 inches wide by 16 inches long by 1 inch thick and had at least one visible joint.

After curing, the profile went through a light sanding with 220-320 grit sanding belts and a styrene-acrylic latex-based primer applied at a rate of 100-120 grams per square meter. The material was flashed for 30-40 seconds and then cured for 120 seconds at 65 degrees C. A styrene-acrylic based waterborne enamel was then applied at a rate of 90-100 grams per square meter (gsm), flashed for 90 seconds and cured at 60 degrees C for 180 seconds. The images in FIG. 1 show the output of each step of the process.

FIG. 1 shows a coating sequence for board samples having visible joint(s) at each step of the process, from left to right, 1) a bare wood board, 2) a board coated with the putty composition of Example 1, 3) a board coated with the putty composition of Example 1 and primer, 4) a board coated with the putty composition of Example 1, primer, and enamel. FIG. 1 shows that with one coat of primer at 100-120 gsm, the board joint is no longer noticeable, indicating less shrinkage than normally seen. Shrinkage was determined visually.

Example 1 is a sandable putty composition for interior use, hence it has a higher amount of calcium carbonate.

**Table 2**

| **Component (wt%)** | | **Ex. 1** | **Ex. 2** |
|---|---|---|---|
| EBECRYL^{®} 745 | Non-reactive acrylic oligomer (blend of about 50 wt % monomers (HDDA and TPDGA) and about 50 wt % non-reactive oligomers) | - | 38.3 |
| EBECRYL^{®} 3500 | UV curable epoxy acrylate oligomer | 8.0 | 13.5 |
| CN991 | UV curable urethane acrylate oligomer | 15.5 | - |
| LAROMER^{®} PO 94 F | UV curable oligomer | 22.6 | - |
| LAROMER^{®} LR 8765 | UV curable Aliphatic epoxy-modified acrylate oligomer | - | 26.3 |
| PARALOID^{™} B-66 | Non-reactive acrylic oligomer | 6.7 | - |
| LAROMER^{®} HDDA/ AGISYN^{®} 2816 | Monomer | 4.0 | - |
| LAROMER^{®} TPGDA | Monomer | 4.0 | - |
| IRGACURE^{®} 184 | Photoinitiator (surface-cure) | 3.1 | 0.1 |
| IRGACURE^{®} 819 | Photoinitiator (through-cure) | 0.3 | 5.2 |
| OMYACARB^{®} 5 | Calcium carbonate | 26.7 | 5.4 |
| AEROSIL^{®} R 972 | Fumed Silica | 6.6 | 8.4 |
| BYK-R 605 | Amide wax | 1.2 | 2.1 |
| | Defoamer additive | 1.3 | 0.8 |
| Solids content (wt %) | | 100 | 100 |

### Example 2 (Inventive - Exterior Application)

The formulation shown for Example 2 in Table 2 was blended thoroughly, with care to grind in the total inorganics into the resin matrix such that they were fully wetted and incorporated using methods common in the art. The material was loaded into the trough of a specialized automated gesso machine (available from Stiles Machinery of Greensboro North Carolina for application. Suitable dies for the profiles being coated (in this case, a rectangular profile) were selected and the machine run. Settings on the machine were 100-200 fpm, with a UV curing power of 350-450 MJ and dwell time of 1-2 seconds. Approximately 35-55 grams per square meter of the putty were applied to boards that were 12 inches wide by 16 inches long by 1 inch thick and had at least one visible joint.

After curing, the profile went through a light sanding with 220-320 grit sanding belts and a styrene-acrylic latex-based primer applied at a rate of 100-120 grams per square meter. The material was flashed for 30-40 seconds and then cured for 120 seconds at 65 degrees C. A styrene-acrylic based waterborne enamel was then applied at a rate of 90-100 grams per square meter, flashed for 90 seconds and cured at 60 degrees C for 180 seconds.

The board joint coated with the putty composition of Example 2 is no longer noticeable, indicating less shrinkage than normally seen. Shrinkage was determined visually. Unlike Example 1, the exterior coating of Example 2 does not require sanding prior to application of a subsequent coat.

**Table 3**

| **Component (wt%)** | | **Ex. 3 Comp** | **Ex. 4 Comp** | **Ex. 5 Comp** |
|---|---|---|---|---|
| UV curable oligomer | epoxy acrylate oligomer | 25 | 5 | 8 |
| | urethane acrylate oligomer | 16 | 15.9 | 16 |
| | polyester acrylate oligomer | 23 | 10 | 23 |
| Blend of about 50 wt % monomers (HDDA and TPDGA) and about 50 wt % non-reactive oligomers) | non-reactive acrylic oligomer | - | 16.5 | 4.5 |
| | monomer | - | 16.5 | 4.5 |
| Monomer | | 6 | 6 | 6 |
| Photoinitiator (surface-cure) | | - | - | 3.5 |
| Photoinitiator (10:1 blend of surface-cure to through-cure) | | 3.5 | 3.5 | - |
| Calcium carbonate | | 20 | 20 | 27 |
| Fumed Silica | | 6 | 6 | 6 |
| Amide wax | | 0.6 | 0.6 | 0.6 |
| Defoamer additive | | 1 | 1 | 1 |
| Solids content (wt %) | | 100 | 100 | 100 |

The putty compositions of Examples 3 to 5 below were prepared in the same manner as Examples 1 and 2.

### Example 3 (Comparative - No Non-Reactive Acrylic Oligomer)

The cured putty composition of Example 3 in Table 3 could not be coated with waterborne paint unless the putty composition was sanded (to allow for mechanical bonding between the putty and the paint) before application of the waterborne paint.

### Example 4 (Comparative - Non-Reactive Acrylic Oligomer Above Claimed Range)

The cured putty composition of Example 4 in Table 3 was too tacky after UV cure (possibly as a result of the large amount of non-reactive acrylic oligomer) and could not be handled.

### Example 5 (Comparative - Only One Photoinitiator)

The cured putty composition of Example 5 in Table 3 was physically dry as it came out of the UV light oven but in portions having a larger depth profile or where the coating was applied very heavily due to the size of the wood defect, there was no adhesion due to the lack of through cure or excessive surface cure.

In view of the foregoing description and examples, it will be apparent to those skilled in the art that equivalent modifications thereof can be made without departing from the scope of the claims.

## Claims

1. A putty composition comprising:
about 6 to 50 wt % of a UV curable oligomer;
about 4 to 25 wt % of a non-reactive oligomer;
about 5 to 30 wt % of a UV-reactive monomer;
an extender;
about 3-10 wt % of fumed silica;
a polyhydroxycarboxylic acid amide; and
about 3-6 wt % of photoinitiators, said photoinitiators comprising a surface-cure photoinitiator and a through-cure photoinitiator; and
wherein the putty composition has a solids content of about 99 wt% or greater.

2. The putty composition of claim 1, wherein the ratio by weight of the photoinitiator for surface-cure to the photoinitiator for through-cure is from about 5:1 to about 10:1.

3. The putty composition of claim 1 or 2, wherein the photoinitiator for surface-cure comprises cyclohexyl phenyl ketone and the photoinitiator for through-cure comprises benzoyl phosphine oxide.

4. The putty composition according to any one of the preceding claims, wherein the non-reactive oligomer is an acrylic resin, a vinyl resin, a nitrocellulose resin, or mixtures thereof.

5. The putty composition according to any one of the preceding claims, wherein the UV curable oligomer is selected from the group consisting of aliphatic or aromatic urethane, epoxy, or polyester acrylates and mixtures thereof.

6. The putty composition according to any one of thae preceding claims, wherein the UV curable oligomer has a functionality equal to or greater than 2.

7. The putty composition according to any one of the preceding claims, wherein the monomer is selected from the group consisting of trimethylolpropane triacrylate (TMPTA), neopentyl glycol diacrylate (NPGDA), dipropyleneglycol diacrylate (DPGDA), tripropylene glycol diacrylate (TRPDGA), trimethylolpropane triacrylate (TMPTA), trimethylolpropane trimethacrylate (TMPTMA), pentaerythritol triacrylate (PETA) and mixtures thereof.

8. A putty composition according to any one of the preceding claims, wherein the UV-reactive monomer has a functionality of 2 to 4.

9. The putty composition according to any one of the preceding claims, wherein the extender is selected from the group consisting of talc, gypsum, calcium carbonate, wollastonite, barium sulfate, and mixtures thereof.

10. The putty composition according to any one of the preceding claims, wherein the extender is present in amount of about 5 to 30 wt % based on the weight of the putty composition.

11. The putty composition according to any one of the preceding claims, wherein the ratio by weight of polyhydroxycarboxylic acid amide to fumed silica is 1:10 to 1:4.

12. The method of repairing a defect in a substrate comprising:
a) providing the substrate;
b) applying the putty composition according to any one of the preceding claims to the substrate; and
c) curing the putty composition with UV radiation.

13. The method of claim 12, further comprising
d) applying a primer over the substrate, and
e) applying an enamel over the primed substrate.

14. The method of claim 13, further comprising sanding the substrate after the curing step c) and prior to step d).

15. A substrate coated entirely or partially with the putty composition according to any one of claims 1 to 11.

## Patentansprüche

1. Kittzusammensetzung, umfassend:
zu etwa 6 bis 50 Gew.-% ein UV-härtbares Oligomer;
zu etwa 4 bis 25 Gew.-% ein nicht reaktives Oligomer;
zu etwa 5 bis 30 Gew.-% ein UV-reaktives Monomer;
einen Füllstoff;
zu etwa 3-10 Gew.-% pyrogenes Siliciumdioxid;
ein Polyhydroxycarbonsäureamid; und
zu etwa 3-6 Gew.-% Photoinitiatoren, wobei die Photoinitiatoren einen oberflächenhärtenden Photoinitiator und einen durchhärtenden Photoinitiator umfassen; und
wobei die Kittzusammensetzung einen Feststoffgehalt von etwa 99 Gew.-% oder mehr aufweist.

2. Kittzusammensetzung nach Anspruch 1, wobei das Gewichtsverhältnis des Photoinitiators zur Oberflächenhärtung zu dem Photoinitiator zur Durchhärtung bei etwa 5 : 1 bis etwa 10 : 1 liegt.

3. Kittzusammensetzung nach Anspruch 1 oder 2, wobei der Photoinitiator zur Oberflächenhärtung Cyclohexylphenylketon umfasst und der Photoinitiator zur Durchhärtung Benzoylphosphinoxid umfasst.

4. Kittzusammensetzung nach einem der vorstehenden Ansprüche, wobei es sich bei dem nicht reaktiven Oligomer um ein Acrylharz, ein Vinylharz, ein Nitrocelluloseharz oder Gemische davon handelt.

5. Kittzusammensetzung nach einem der vorstehenden Ansprüche, wobei das UV-härtbare Oligomer ausgewählt ist aus der Gruppe bestehend aus aliphatischen oder aromatischen Urethan-, Epoxy- oder Polyesteracrylaten und Gemischen davon.

6. Kittzusammensetzung nach einem der vorstehenden Ansprüche, wobei das UV-härtbare Oligomer eine Funktionalität von gleich oder größer 2 aufweist.

7. Kittzusammensetzung nach einem der vorstehenden Ansprüche, wobei das Monomer ausgewählt ist aus der Gruppe bestehend aus Trimethylolpropantriacrylat (TMPTA), Neopentylglycoldiacrylat (NPGDA), Dipropylenglycoldiacrylat (DPGDA), Tripropylenglycoldiacrylat (TRPDGA), Trimethylolpropantriacrylat (TMPTA), Trimethylolpropantrimethacrylat (TMPTMA), Pentaerythrittriacrylat (PETA) und Gemischen davon.

8. Kittzusammensetzung nach einem der vorstehenden Ansprüche, wobei das UV-reaktive Monomer eine Funktionalität von 2 bis 4 aufweist.

9. Kittzusammensetzung nach einem der vorstehenden Ansprüche, wobei der Füllstoff ausgewählt ist aus der Gruppe bestehend aus Talk, Gips, Calciumcarbonat, Wollastonit, Bariumsulfat und Gemischen davon.

10. Kittzusammensetzung nach einem der vorstehenden Ansprüche, wobei der Füllstoff in einer Menge von etwa 5 bis 30 Gew.-%, bezogen auf das Gewicht der Kittzusammensetzung, vorhanden ist.

11. Kittzusammensetzung nach einem der vorstehenden Ansprüche, wobei das Gewichtsverhältnis von Polyhydroxycarbonsäureamid zu pyrogenem Siliciumdioxid bei 1 : 10 bis 1 : 4 liegt.

12. Verfahren zum Reparieren eines Defekts in einem Substrat, umfassend:
a) Bereitstellen des Substrats;
b) Aufbringen der Kittzusammensetzung nach einem der vorstehenden Ansprüche auf das Substrat; und
c) Härten der Kittzusammensetzung mit UV-Strahlung.

13. Verfahren nach Anspruch 12, ferner umfassend
d) Aufbringen einer Grundierung über dem Substrat und
e) Aufbringen einer Emaille über dem grundierten Substrat.

14. Verfahren nach Anspruch 13, ferner umfassend das Abschleifen des Substrats nach dem Härtungsschritt c) und vor Schritt d).

15. Substrat, das vollständig oder teilweise mit der Kittzusammensetzung nach einem der Ansprüche 1 bis 11 beschichtet ist.

## Revendications

1. Composition de mastic comprenant :
environ 6 à 50 % en poids d'un oligomère durcissable aux UV ;
environ 4 à 25 % en poids d'un oligomère non réactif ;
environ 5 à 30 % en poids d'un monomère réactif aux UV ;
un extenseur ;
environ 3-10 % en poids de silice fumée ;
un amide d'acide polyhydroxycarboxylique ; et
environ 3-6 % en poids de photoinitiateurs, lesdits photoinitiateurs comprenant un photoinitiateur de durcissement en surface et un photoinitiateur de durcissement dans la masse ; et
dans lequel la composition de mastic a une teneur en solides d'environ 99 % en poids ou plus.

2. Composition de mastic selon la revendication 1, dans laquelle le rapport pondéral du photoinitiateur pour durcissement en surface sur photoinitiateur pour durcissement dans la masse est d'environ 5:1 à environ 10:1.

3. Composition de mastic selon la revendication 1 ou 2, dans laquelle le photoinitiateur pour durcissement en surface comprend de la cyclohexylphénylcétone et le photoinitiateur pour durcissement dans la masse comprend de l'oxyde de benzoylphosphine.

4. Composition de mastic selon l'une quelconque des revendications précédentes, dans laquelle l'oligomère non réactif est une résine acrylique, une résine vinylique, une résine nitrocellulosique ou des mélanges de celles-ci.

5. Composition de mastic selon l'une quelconque des revendications précédentes, dans laquelle l'oligomère durcissable aux UV est choisi dans le groupe constitué par les acrylates d'uréthane, d'époxy ou de polyester aliphatiques ou aromatiques et des mélanges de ceux-ci.

6. Composition de mastic selon l'une quelconque des revendications précédentes, dans laquelle l'oligomère durcissable aux UV a une fonctionnalité égale ou supérieure à 2.

7. Composition de mastic selon l'une quelconque des revendications précédentes, dans laquelle le monomère est choisi dans le groupe constitué par le triacrylate de triméthylolpropane (TMPTA), le diacrylate de néopentylglycol (NPGDA), le diacrylate de dipropylèneglycol (DPGDA), le diacrylate de tripropylèneglycol (TRPDGA), le triacrylate de triméthylolpropane (TMPTA), le triméthacrylate de triméthylolpropane (TMPTMA), le triacrylate de pentaérythritol (PETA) et des mélanges de ceux-ci.

8. Composition de mastic selon l'une quelconque des revendications précédentes, dans laquelle le monomère réactif aux UV a une fonctionnalité de 2 à 4.

9. Composition de mastic selon l'une quelconque des revendications précédentes, dans laquelle l'extenseur est choisi dans le groupe constitué par le talc, le gypse, le carbonate de calcium, la wollastonite, le sulfate de baryum, et des mélanges de ceux-ci.

10. Composition de mastic selon l'une quelconque des revendications précédentes, dans laquelle l'extenseur est présent en une quantité d'environ 5 à 30 % en poids sur la base du poids de la composition de mastic.

11. Composition de mastic selon l'une quelconque des revendications précédentes, dans laquelle le rapport pondéral de l'amide d'acide polyhydroxycarboxylique sur la silice fumée est de 1:10 à 1:4.

12. Procédé de réparation d'un défaut dans un substrat comprenant :
a) fourniture du substrat ;
b) application de la composition de mastic selon l'une quelconque des revendications précédentes sur le substrat ; et
c) durcissement de la composition de mastic avec un rayonnement UV.

13. Procédé selon la revendication 12, comprenant en outre
d) application d'un apprêt sur le substrat, et
e) application d'un émail sur le substrat apprêté.

14. Procédé selon la revendication 13, comprenant en outre le sablage du substrat après l'étape de durcissement c) et avant l'étape d).

15. Substrat revêtu entièrement ou partiellement par la composition de mastic selon l'une quelconque des revendications 1 à 11.
